# EUROPÄISCHE PATENTSCHRIFT

(11) **EP 3 194 758 B1**
(45) Veröffentlichungstag und Bekanntmachung des Hinweises auf die Patenterteilung: **24.10.2018**
(21) Anmeldenummer: 15748027.8
(22) Anmeldetag: 04.08.2015
(51) Int. Cl.: F02N 7/08, B60K 6/12, E02F 9/22, F15B 1/033, F15B 11/16

(54) **HYDROSTATISCHER ANTRIEB**
HYDROSTATIC DRIVE
ENTRAÎNEMENT HYDROSTATIQUE

(30) Priorität: 15.09.2014 DE 102014218419
(43) Veröffentlichungstag der Anmeldung: 26.07.2017
(73) Patentinhaber: Robert Bosch GmbH, 70442 Stuttgart (DE)
(72) Erfinder: MAST, Michael, 88433 Schemmerhofen (DE); HERNANDEZ LADERA, Paul Luis, 89275 Elchingen (DE)
(74) Vertreter: Thürer, Andreas
(86) Internationale Anmeldenummer: PCT/EP2015/067919
(87) Internationale Veröffentlichungsnummer: WO 2016/041685

(56) Entgegenhaltungen:
- EP-A1- 2 570 381
- WO-A1-2012/125798
- DE-A1-102005 027 940
- FR-A1- 2 973 078
- US-A1- 2004 103 656
- US-A1- 2012 204 627

## Beschreibung

Die Erfindung betrifft einen hydrostatischen Antrieb, der insbesondere zum Starten einer Brennkraftmaschine, insbesondere eines Dieselmotors, vorgesehen ist und die Merkmale aus dem Oberbegriff des Patentanspruchs 1 aufweist.

Aus der WO 2012/125798 A1 ist ein hydrostatischer Antrieb bekannt, der eine Hydromaschine aufweist, die im Betrieb als Hydromotor eine Brennkraftmaschine starten und im Betrieb als Pumpe einen hydropneumatischen Hochdruckspeicher laden und weitere hydraulische Verbraucher mit Druckmittel versorgen kann.

Die Hydromaschine ist mittels einer hydraulischen Verstellvorrichtung in ihrem Hubvolumen von einem maximalen positiven Hubvolumen über ein Hubvolumen null zu einem maximalen negativen Hubvolumen verstellbar, wobei bei positivem Hubvolumen ein Pumpenbetrieb und bei negativem Hubvolumen ein Motorbetrieb vorliegen möge. Das Hubvolumen ist dabei die Druckmittelmenge, die pro Umdrehung einer Triebwelle von der Hydromaschine gefördert oder geschluckt wird. Für den Betrieb als Hydromotor ist die Hydromaschine aus dem Hochdruckspeicher über eine Druckleitung, die zwischen einem Druckanschluss der Hydromaschine und dem Hochdruckspeicher verläuft, mit Druckmittel versorgbar. Ein Speicherabsperrventil mit einer ersten Stellung und mit einer zweiten Stellung ist in der Druckleitung angeordnet, wobei das eine fluidische Verbindung vom Hochdruckspeicher zur Hydromaschine in der ersten Stellung offen und in der zweiten Stellung abgesperrt ist. Das Speicherabsperrventil ist in Abhängigkeit von den Signalen eines elektronischen Steuergeräts betätigbar.

Eine hydraulische Verstellvorrichtung für das Hubvolumen einer hydrostatischen Maschine weist üblicherweise einen oder mehrere Stellkolben, an die Stellkammern angrenzen und zumindest eine Rückstellfeder auf, unter deren Wirkung bei Wegfall einer Druckbeaufschlagung der Stellkammern die Hydromaschine auf ein vorbestimmtes Hubvolumen gestellt wird.

Der Erfindung liegt die Aufgabe zu Grunde, einen hydrostatischen Antrieb zum Starten einer Brennkraftmaschine zu schaffen, bei dem die Hydromaschine schnell und ohne übermäßige Belastung der Bauteile aus dem Verstellbereich mit einem negativen Hubvolumen verstellt werden kann.

Diese Aufgabe wird gelöst durch einen hydrostatischen Antrieb, der die Merkmale aus dem Patentanspruch 1 aufweist.

Bei einem erfindungsgemäßen hydrostatischen Antrieb gibt bei einer Verstellung der Hydromaschine von einem negativen Hubvolumen zu einem positiven Hubvolumen das elektronische Steuergerät dann ein Signal zum Umschalten des Speicherabsperrventils von der ersten Stellung in die zweite Stellung, dass das Speicherabsperrventil erst bei einem Hubvolumen null oder bei einem positiven Hubvolumen der Hydromaschine in die zweite Stellung umschaltet. Dadurch ist sichergestellt, dass während der Zeit, die die Verstellung vom maximalen negativen Hubvolumen bis zum Hubvolumen null beansprucht, noch eine fluidische Verbindung vom Druckanschluss der Hydromaschine zum Hochdruckspeicher besteht. Damit ist sichergestellt, dass die Hydromaschine die Druckleitung nicht leersaugt und dass somit keine Kavitation auftritt, die zur Beschädigung von Bauteilen führen könnte. Je nach Art der Verstelleinrichtung kann nun auch der Druck in der Druckleitung dazu benutzt werden, um eine Stellkammer mit Druck zu beaufschlagen, deren Druckbeaufschlagung im Sinne einer Verstellung von einem negativen Hubvolumen in Richtung Hubvolumen null wirkt, so dass nicht nur die Kraft einer Rückstellfeder der Verstelleinrichtung, sondern auch eine Druckkraft für die Rückstellung der Hydromaschine aus dem Bereich mit negativem Hubvolumen genutzt werden kann.

Vorteilhafte Ausgestaltungen der Erfindung kann man abhängigen Patentansprüchen entnehmen.

Es sind verstellbare Hydromaschinen bekannt, die eine Verstellvorrichtung aufweisen, die eine erste an einen ersten Stellkolben angrenzende Stellkammer, für die ein eine Verstellung in Richtung maximalem negativen Hubvolumen bewirkender Zufluss und ein Abfluss von Druckmittel durch eine Ventilanordnung steuerbar ist, eine zweite an einen zweiten Stellkolben angrenzende Stellkammer, die mit der Druckleitung fluidisch verbunden ist und die sich bei einer Verstellung in Richtung maximalem negativen Hubvolumen verkleinert und bei einer Verstellung in Richtung maximalem positiven Hubvolumen vergrößert, und eine Rückstellfeder umfasst, die Richtung maximalem positiven Hubvolumen wirkt. Eine solche Hydromaschine ist, wenn die Stellkammern von Druck entlastet sind, auf das maximale positive Hubvolumen gestellt. Durch Zufluss von Druckmittel in die an den ersten Stellkolben, dessen Wirkfläche größer ist als die Wirkfläche des zweiten Stellkolbens, angrenzende Stellkammer kann die Hydromaschine von maximalem positiven Hubvolumen über ein Hubvolumen null bis zu einem maximalen negativen Hubvolumen verstellt werden. Hier steht also in der zweiten Stellkammer immer der in der Druckleitung anstehende Druck an, so dass bei Aufrechterhaltung eines Drucks in der Druckleitung während der Rückstellung der Hydromaschine aus dem Motorbetrieb ohne weitere Steuerung durch ein Ventil eine Druckkraft zur Rückstellung beiträgt.

Die Ventilanordnung zur Steuerung des Zuflusses zur und des Abflusses von Druckmittel aus der ersten Stellkammer umfasst bevorzugt ein Steuerventil, über das für eine Verstellung zu negativem Hubvolumen der ersten Stellkammer unabhängig vom Arbeitsanschluss der Hydromaschine aus einer Druckmittelquelle, insbesondere aus dem Hochdruckspeicher mit Druckmittel versorgbar ist.

Für den Betrieb der Hydromaschine als Pumpe umfasst die Ventilanordnung ein hydraulisches Regelgerät, das zusätzlich zu dem Steuerventil vorhanden ist. Für das Zusammenwirken mit dem hydraulischen Regelgerät und mit dem Hochdruckspeicher ist das Steuerventil ein 3/2-Wegeventil mit einem ersten Anschluss, der mit einem Stelldruckausgang des hydraulischen Regelgeräts fluidisch verbunden ist, mit einem zweiten Anschluss, der mit der Druckmittelquelle fluidisch verbunden ist, und mit einem dritten Anschluss, der mit der ersten Stellkammer verbunden ist, und wobei das Steuerventil eine erste Stellung, in der der Ausgang mit dem der erste Eingang fluidisch verbunden und der zweite Eingang abgesperrt ist, und eine zweite Stellung aufweist, in der der Ausgang mit dem zweiten Eingang verbunden und der erster Eingang abgesperrt ist. Somit ist das hydraulische Regelgerät in der ersten Stellung des Steuerventils fähig, das Hubvolumen der Hydromaschine zu beeinflussen, während es in der zweiten Stellung des Steuerventils unwirksam ist.

Insbesondere ist das hydraulische Regelgerät ein Load-Sensing (LS-) Regelventil, das im Sinne eines Druckmittelzuflusses zur ersten Stellkammer der Verstellvorrichtung vom Druck in der Druckleitung und im Sinne eines Druckmittelabflusses aus der ersten Stellkammer von einer Regelfeder und einem LS-Steuerdruck, der an einem LS-Anschluss (X) ansteht, beaufschlagt wird, und wobei noch bei negativem Hubvolumen der Hydromaschine ein LS-Steuerdruck an den LS-Anschluss des Load-Sensing(LS)-Regelventils gegeben wird. Durch entsprechende Wahl des LS-Steuerdrucks, zumindest des LS-Steuerdrucksignals, das den LS-Steuerdruck vorgibt, kann erreicht werden, dass die Hydromaschine einerseits noch schnell aus dem Bereich mit negativem Hubvolumen, aber nicht bis zu maximalem positiven Hubvolumen verstellt wird. Dadurch wird erreicht, dass die Brennkraftmaschine nach dem Starten durch die Hydromaschine nicht unnötigerweise belastet wird und schnell auf die Leerlaufdrehzahl hochlaufen kann.

Vorteilhafterweise wird das Load-Sensing (LS-) Regelventil schon mit einem LS-Steuerdruck beaufschlagt, während sich das Steuerventil noch in seiner zweiten Stellung befindet. Solange sich das Steuerventil noch in seiner zweiten Stellung befindet, bleibt die Beaufschlagung des LS-Regelventils ohne Einfluss, da sein Steuerausgang nicht mit der ersten Stellkammer verbunden ist. Bevorzugt wird der LS-Steuerdruck sogar dem Speicherdruck nachgeführt, solange das Steuerventil seine zweite Stellung einnimmt. Im Moment des Umschaltens des Steuerventils steht dann ein geeigneter LS-Steuerdruck schon an, ohne dass noch eine Steuerleitung gefüllt oder ein beweglicher Steuerkörper eines Ventils einen großen Weg machen muss.

Vorteilhafterweise ist der LS-Steuerdruck etwa um das Druckäquivalent der Regelfeder niedriger ist als der Druck in der Druckleitung, wenn die Hydromaschine beim Zurückschwenken vom maximalen negativen Hubvolumen das Hubvolumen null erreicht, so dass die Hydromaschine über das Hubvolumen null, aber nicht bis zu maximalem positiven Hubvolumen verstellt wird. Abweichungen des LS-Steuerdrucks von dem genauen Wert, der sich aus der Differenz des Drucks in der Druckleitung und dem Druckäquivalent der Regelfeder ergibt, werden bei einem nur wenig vom Hubvolumen null abweichenden Hubvolumen ausgeglichen, zumal nach dem Nulldurchgang des Hubvolumens der Hydrospeicher von der Hydromaschine getrennt ist und nur noch der Druck in der Druckleitung, die eine geringe hydraulische Kapazität hat, verändert werden muss.

Bevorzugt wird schon ein LS-Steuerdruck an den LS-Anschluss des Load-Sensing (LS)-Regelventils gegeben wird, wenn sich das Steuerventil noch in seiner zweiten Stellung befindet, wobei der LS-Steuerdruck zunächst mit einer festen Druckdifferenz unterhalb des Drucks im Hochdruckspeicher dem sinkenden Speicherdruck folgt und wobei zumindest das LS-Steuerdrucksignal, das den LS-Steuerdruck vorgibt, konstant gehalten wird, wenn das Steuerventil von seiner zweiten Stellung in seine erste Stellung geschaltet wird. Es kann dabei passieren, dass der LS-Steuerdruck nicht dem vom LS-Steuerdrucksignal vorgegebenen Wert entspricht, weil das LS-Steuerdrucksignal vom Speicherdruck abgeleitet wird und der Druck an der Stelle des Fluidpfads zwischen den Hochdruckspeicher und der Hydromaschine , an der das Steueröl für die Generierung des LS-Steuerdrucks entnommen wird, wegen der Druckverluste zwischen dem Hochdruckspeicher und der Hydromaschine aufgrund der Fluidströmung niedriger ist als der gewünschte LS-Steuerdruck. Der aktuelle LS-Steuerdruck kann aber nicht höher sein als der Druck, aus dem er generiert wird. Es nimmt also dann der LS-Steuerdruck mit dem Druck im Fluidpfad weiter ab, obwohl das LS-Steuerdrucksignal konstant gehalten wird. Ist im Moment des Umschaltens des Steuerventils der aktuelle LS-Steuerdruck gleich dem oder um weniger als das Druckäquivalent der Regelfeder kleiner als der Druck, der in Gegenrichtung auf das LS-Regelventil wirkt, so befindet sich dieses in einer Stellung, in der die erste Stellkammer mit Tank verbunden ist. Die Hydromaschine wird dann sehr schnell aus dem Bereich negativen Hubvolumens in Richtung Hubvolumen null verstellt. Sollte aufgrund besonderer Umstände im Moment des Umschaltens des Steuerventils der aktuelle LS-Steuerdruck um mehr als das Druckäquivalent der Regelfeder kleiner als der Druck sein, der in Gegenrichtung auf das LS-Regelventil wirkt, so befindet sich dieses zunächst noch in einer Stellung, in der die erste Stellkammer mit der Druckleitung verbunden ist. Die Hydromaschine verbleibt dann etwas länger im Motorbetrieb. Der Druck in der Druckleitung und im Hochdruckspeicher fällt ab, so dass das LS-Regelventil in die Stellung kommt, in der die erste Stellkammer zum Tank entlastet ist.

Es hat sich herausgestellt, dass die Hydromaschine schnell zurückschwenkt und nicht zu großen positiven Hubvolumina ausschwenkt, wenn die feste Differenz zwischen dem Speicherdruck und dem LS-Steuerdrucksignal etwa 1,75 mal so groß ist wie das Druckäquivalent der Regelfeder des LS-Regelventils.

Es ist möglich, das hydrostatische Antriebssystem nur in Abhängigkeit von der Drehzahl der Hydromaschine und vom Druck im Hochdruckspeicher, der mit einem Druckaufnehmer erfasst wird, zu steuern.

Eine genauere Steuerung und eine schnellere Rückstellung erscheint möglich, wenn die Hydromaschine mit einem Aufnehmer für das Hubvolumen ausgestattet ist und wenn nach dem Umschalten des Steuerventils von der zweiten Stellung in die erste Stellung die Höhe des LS-Steuerdrucks, zumindest des LS-Steuerdrucksignals, in Abhängigkeit vom Speicherdruck und von der Größe des negativen Hubvolumens oder der Änderung des negativen Hubvolumens bestimmt wird.

Ist ein Aufnehmer für das Hubvolumen vorhanden, so kann nach dem Umschalten des Steuerventils von der zweiten Stellung in die erste Stellung, also nach dem Ende des Startvorgangs, das Speicherabsperrventil in Abhängigkeit von der Größe des erfassten Hubvolumens von der ersten Stellung in die zweite Stellung umgeschaltet werden.

Ein Ausführungsbeispiel einer erfindungsgemäßen hydrostatischen Antriebs ist in der Zeichnung dargestellt. Anhand der einzigen Figur dieser Zeichnung wird die Erfindung nun näher erläutert.

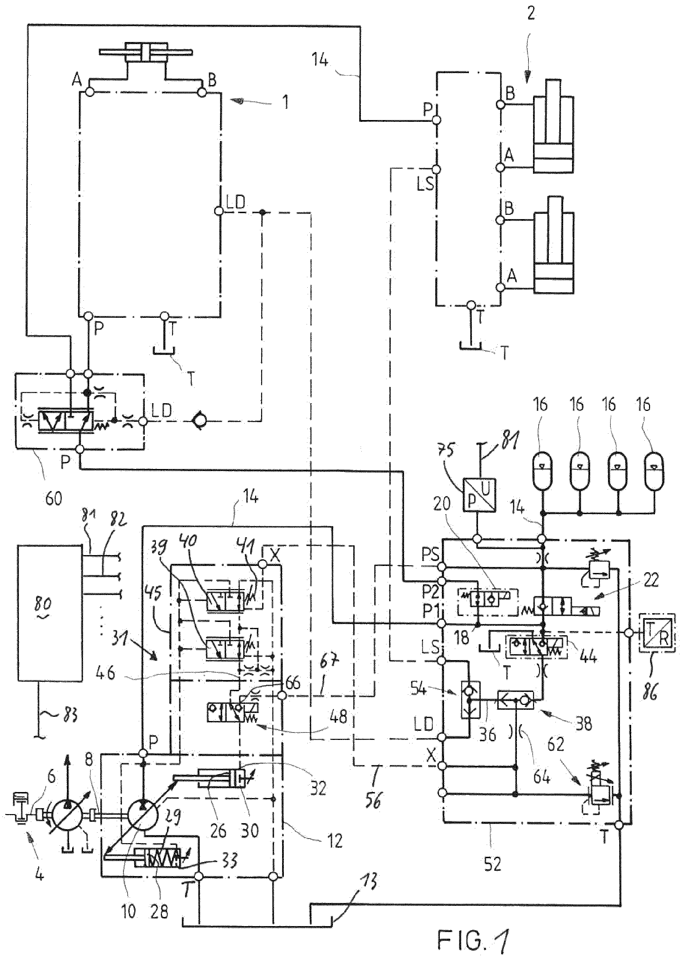

Figur 1 zeigt einen Schaltplan des Ausführungsbeispiels.
Der in der Figur 1 als Schaltplan dargestellte hydrostatische Antrieb dient außer zum Starten eines Dieselmotors auch zum Lenken und zum Betätigen einer Ausrüstung einer mobilen Arbeitsmaschine und umfasst eine hydrostatische Lenkung 1 und weitere hydraulische Verbraucher 2. Der Antrieb wird in Kombination mit einem Dieselmotor 4 verwendet, dessen Drehzahl durch einen nicht näher dargestellten Drehzahlsensor erfasst wird und dessen Kurbelwelle 6 an eine Triebwelle 8 einer in ihrem Hubvolumen über ein Hubvolumen null zwischen positiven Hubvolumina und negativen Hubvolumina verstellbaren Hydromaschine 10 gekoppelt ist, die als Axialkolbenmaschine in Schrägscheibenbauart ausgebildet ist. Die Schrägscheibe ist dabei das Hubsteuerelement, das durch seine Position das Hubvolumen der Hydromaschine zwischen einem maximalen positiven und einem maximalen negativen Hubvolumen bestimmt. Eine derartige Axialkolbenmaschine wird auch als durchschwenkbare Axialkolbenmaschine bezeichnet. Deren Gehäuse 12 hat einen Tankanschluss T und einen Druckanschluss P, wobei diese beiden Anschlüsse T und P dauerhaft und eindeutig Hochdruck und Tankdruck zugeordnet sind. Die Durchschwenkbarkeit ermöglicht es, die Hydromaschine 10 unter Beibehaltung der Drehrichtung bei positiven Hubvolumina in einem Pumpenbetrieb, in der sie über den Tankanschluss T Druckmittel aus einem Tank 13 ansaugt und in den Druckanschluss P abgibt, und bei negativen Hubvolumina in einem Motorbetrieb zu betreiben, in dem Druckmittel dem Druckanschluss P von einer Druckmittelquelle zufließt, das über dem Tankanschluss T in den Tank 13 abströmt.
Der Druckanschluss P ist über eine verzweigte Druckleitung 14 mit der Lenkung 1, mit den weiteren Verbrauchern 2 und mit einem Hochdruckspeicher 16 verbunden. Dazu hat die Druckleitung 14 eine Verzweigung 18. Im Folgenden soll jeweils von einem Hochdruckspeicher die Rede sein, auch wenn wie gezeigt mehrere Hochdruckspeicher parallel zueinander geschaltet sind.

Zwischen der Verzweigung 18 einerseits und der Lenkung 1 und den weiteren Verbrauchern 2 andererseits ist ein Verbraucherabsperrventil 20 vorgesehen, das als 2/2-Wege-Schaltventil ausgebildet ist. Es verbindet in einer durch eine Feder vorgespannten Grundstellung die Lenkung 1 und die weiteren Verbraucher 2 mit dem Druckanschluss der Hydromaschine 10 und dem Hochdruckspeicher 16, während es in einer betätigten Schaltstellung die Druckleitung 14 zur Lenkung 1 und zu den Verbrauchern 2 hin absperrt.

Der Druck am Druckanschluss P sei im Folgenden als Pumpendruck bezeichnet. Er kann, auch wenn die Verbindung zwischen der Hydromaschine und dem Hochdruckspeicher offen ist, aufgrund von Strömungsverlusten vom Speicherdruck abweichen.

Zwischen der Verzweigung 18 und dem Hochdruckspeicher 16 ist in der Druckleitung 14 ein Speicherabsperrventil 22 vorgesehen, das in einer durch eine Feder vorgespannten Grundstellung in Flussrichtung vom Hochdruckspeicher 16 zu der der Verzweigung 18 und der Hydromaschine 10 sperrt und das in einer betätigten Schaltstellung die fluidische Verbindung zwischen dem Hochdruckspeicher 16 und der Hydromaschine 10 öffnet. Ein Druckmittelfluss von der Hydromaschine 10 zum Hochdruckspeicher 16 ist in der Grundstellung des Speicherabsperrventils 22 möglich

Die als durchschwenkbare Axialkolbenmaschine ausgebildete Hydromaschine 10 besitzt eine Verstellvorrichtung, die im Wesentlichen einen ersten Stellkolben 26 aufweist, der gegen einen zweiten Stellkolben 28 und eine Rückstellfeder 29 wirkt. Die Wirkfläche des ersten Stellkolbens 26 ist größer als die Wirkfläche des zweiten Stellkolbens 28. Der Stellkolben 26 begrenzt eine Stellkammer 30. Gesteuert über eine Ventilanordnung 31 kann Druckmittel über einen Kammeranschluss 32 der Stellkammer 30 zugeführt und aus der Stellkammer 30 abgelassen werden. Der zweite Stellkolben 28 begrenzt eine Stellkammer 33, die innerhalb des Gehäuses 12 dauernd mit dem Druckanschluss P fluidisch verbunden ist. Im Stillstand der Hydromaschine bauen sich die Drücke in der Stellkammer 30 und in der Druckleitung 14 durch Leckage verhältnismäßig schnell ab, so dass die Hydromaschine durch die Rückstellfeder 29 auf maximales positives Hubvolumen gestellt wird. Bei einer Befüllung der Stellkammer 30 wird die Hydromaschine 10 vom maximalen positiven Hubvolumen zu kleineren positiven Hubvolumina zurückgeschwenkt. Bei einer weitergehenden Befüllung der Stellkammer 30 wird die Hydromaschine 10 über ein Hubvolumen null verschwenkt und danach zu negativen Hubvolumina bis zu einem maximalen negativen Hubvolumen verstellt.

Die Ventilanordnung 31 umfasst drei 3/2- Proportional-Wegeventile, nämlich ein Load-Sensing-Regelventil (LS-Regelventil) 40, ein Druckregelventil 39, das zusammen mit dem LS-Regelventil 40 auch als im folgenden mit der Bezugszahl 45 versehener Druck-Förderstromregler bezeichnet wird und das auf einen über den üblicherweise auftretenden Lastdrücken und über dem maximalen Ladedruck des Hochdruckspeichers 16 liegenden Druck eingestellt ist, sowie ein als Schaltventil ausgebildetes Steuerventil 48. Das Druckregelventil 39 besitzt einen ersten Anschluss, der über eine Entlastungsleitung mit dem Tank 13 verbindbar ist. Ein zweiter Anschluss des Druckregelventils 39 liegt an dem Druckanschluss P. Der dritte Anschluss, der mit dem ersten Anschluss oder mit dem zweiten Anschluss verbindbar ist, ist über einen stellkammerseitigen Anschluss 46 des Druck-Förderstromreglers 45 mit der Stellkammer 30 am Stellkolben 26 verbindbar. Ein erster Anschluss des LS-Regelventils 40 liegt an der Entlastungsleitung, ein zweiter Anschluss an dem Druckanschluss P. Der dritte Anschluss des LS-Regelventils 40 ist mit dessen ersten oder zweiten Anschluss verbindbar und dauernd mit dem ersten Anschluss des Druckregelventils 39 verbunden. Ein nicht näher dargestellter Schieber des Druckregelventils 39 wird von einer Druckfeder im Sinne einer Verbindung der Stellkammer 30 mit dem dritten Anschluss des LS-Regelventils und vom Pumpendruck im Sinne einer Verbindung der Stellkammer mit dem Druckanschluss P beaufschlagt. Ein nicht näher dargestellter Schieber des LS-Regelventils 40 wird im Sinne Verbindung des dritten Anschlusses mit dem ersten Anschluss und damit mit der Entlastungsleitung von einer Regelfeder 41 und von dem am LS-Anschluss X anstehenden LS-Druck und im Sinne einer Verbindung des dritten Anschlusses mit dem zweiten Anschluss und damit mit dem Druckanschluss P beaufschlagt. Am Schieber des Ventils 40 herrscht ein Kräftegleichgewicht, wenn zwischen dem Pumpendruck und dem LS-Druck eine Differenz besteht, die der Kraft der Regelfeder 41 entspricht. Üblicherweise liegt die Differenz zwischen 10 bar und 25 bar. Diese Differenz wird auch als Druckäquivalent der Regelfeder oder als Pumpen-Δp bezeichnet. Vorliegend möge das Pumpen-Δp 22 bar betragen.

Der LS-Druck ist der höchste Lastdruck von gleichzeitig betätigten Verbrauchern 1 und 2 oder ein vorgegebener LS-Steuerdruck. Der höchste Lastdruck der Verbraucher 1 und 2 wird über eine Wechselventilkette mit dem Wechselventil 54 als letztem Kettenglied abgegriffen und in eine gemeinsame LS-Meldeleitung 36 dieser Verbraucher gemeldet. Die Höchstdruckauswahl zwischen dem höchsten Lastdruck der hydraulischen Verbraucher 1 und 2 und dem vorgegebenen LS-Steuerdruck wird durch ein Wechselventil 38 getroffen, an dessen ersten Eingang der höchste Lastdruck der Verbraucher 1 und 2 ansteht, dessen zweiten Eingang über ein LS-Ventil 44 mit der Druckleitung 14 verbindbar ist und dessen Ausgang mit dem LS-Anschluss X am Druck-Förderstromregler 45 verbunden ist. Zwischen dem zweiten Eingang des ersten Wechselventils 38 und dem LS-Ventil 44 ist eine Düse angeordnet. Diese Düse kann auch entfallen.

In einer durch eine Feder vorgespannten Grundstellung des LS-Ventils 44 ist der zweite Eingang des Wechselventils 38 zur Druckleitung 14 abgesperrt und mit Tank verbunden. Durch Bestromung eines ziehenden Elektromagneten gerät das LS-Ventil 44 in eine Schaltstellung, in der der Druck der Pumpenleitung 14 an den zweiten Eingang des das Wechselventil 38 und, wenn dieser Druck höher als der Druck am ersten Eingang des Wechselventils 38 ist, an den Ausgang diese Wechselventils gegeben wird.

In eine vom Ausgang des Wechselventils 38 zum LS-Anschluss X des Druck-Förderstromreglers 45 führende LS-Meldeleitung 56 ist eine Düse 64 eingefügt. Zwischen dieser Düse und dem LS-Anschluss X des Druck-Förderstromreglers 45 ist ein proportionalverstellbares Druckbegrenzungsventil 62 an die LS-Meldeleitung 56 angeschlossen, dessen Ausgang mit Tank verbunden ist. Die Druckeinstellung des Druckbegrenzungsventils ist durch einen Proportionalelektromagneten stetig zwischen einem minimalen Wert und einem maximalen Wert von zum Beispiel 300 bar veränderbar. Das Druckbegrenzungsventil 62 ist ein solches mit fallender Kennlinie, der Druckeinstellwert nimmt also mit zunehmender Bestromung des Elektromagneten ab. Mit Hilfe der Düse 64 und des Druckbegrenzungsventils 62 kann in die LS-Meldeleitung aus dem in der Druckleitung 14 anstehenden Pumpendruck ein LS-Steuerdruck erzeugt werden, der niedriger als der Pumpendruck ist.

Das Steuerventil ist konstruktiv zwischen dem Druck-Förderstromregler 45 und dem Gehäuse 12 der Hydromaschine 10 eingefügt. Es besitzt einen ersten Anschluss 66, der über eine Leitung 67 mit einem Abschnitt der Pumpenleitung 14 verbunden ist, der das Speicherabsperrventil 22 mit dem Hochdruckspeicher 16 verbindet. Ein zweiter Anschluss des Steuerventils 48 ist mit dem stellkammerseitigen Anschluss 46 des Druck-Förderstromreglers 45 verbunden. Ein dritter Anschluss des 3/2-Wegeventils ist mit dem Kammeranschluss 32 der Stellkammer 30 verbunden.

In einer durch eine Feder vorgespannten Grundstellung des Steuerventils 48 ist der Anschluss 66 des Steuerventils 48 abgesperrt. Der Anschluss 46 des Druck-Förderstromreglers 45 ist über das Steuerventil 48 mit dem Kammeranschluss 32 verbunden, so dass der Druck-Förderstromregler 45 die die Hydromaschine 10 regeln kann. Durch ein durch einen ziehenden Elektromagneten bewirktes Umschalten des Steuerventils 48 in seine Schaltstellung wird der zweite Anschluss und damit Anschluss 46 des Druck-Förderstromreglers 45 abgesperrt und der Hochdruckspeicher 16 mit dem Kammeranschluss 32 verbunden.

Die Ventile 20, 22, 38, 44, 54, 62 und 64 sind zu einem Start-Stopp-Ventilblock 52 zusammengefasst. An diesem Ventilblock 52 sitzen darüber hinaus ein Drucksensor 75, mit dem der in dem Hochdruckspeicher 16 herrschende Speicherdruck erfasst wird, und ein Temperatursensor 76, mit dem die Temperatur des Druckmittels erfasst wird.

Die Stopp-Funktion des Dieselmotors 4 und die Startfunktion des hydrostatischen Antriebs werden durch eine elektronische Steuereinheit 80 gesteuert, die über eine elektrische Leitung 81 mit dem Drucksensor 75, mit einer elektrischen Leitung 82 mit dem Elektromagneten des Druckbegrenzungsventils 62, mit einer Mehrzahl von Leitungen 83 mit elektrischen Komponenten am Dieselmotor 4 sowie mit weiteren elektrischen Leitungen mit den elektromagnetisch betätigbaren Ventilen 20, 22, 44 und 48 sowie diversen weiteren Sensoren verbunden ist.

Bei laufendem Dieselmotor nehmen die Ventile 20, 22, 44 und 66 die in der Zeichnung gezeigten Stellungen ein. Das Verbraucherabsperrventil 20 erlaubt somit die Versorgung der hydraulischen Verbraucher 1 und 2 mit Druckmittel. Das LS-Ventil entlastet den zweiten Eingang des Wechselventils 38 zum Tank, so dass am Ausgang des Wechselventils und damit am LS-Anschluss X des Druck-Förderstromreglers 45 der höchste Lastdruck der betätigten hydraulischen Verbraucher 1 und 2 ansteht. Der Elektromagnet des Druckbegrenzungsventils 62 ist derart bestromt, dass das Druckbegrenzungsventil auf etwa 210 bar eingestellt ist. Das Druckbegrenzungsventil 62 begrenzt somit für den load-sensing-geregelten Betrieb der hydraulischen Verbraucher 1 und 2 den LS-Steuerdruck auf etwa 210 bar und den um das Pumpen-Δp von 22 bar höheren Pumpendruck auf etwa 230 bar. Mit dem Druckbegrenzungsventil 62 wird somit die sogenannte Druckabschneidung für den load-sensing-geregelten Betrieb der hydraulischen Verbraucher 1 und 2 realisiert. Das Steuerventil verbindet den stellkammerseitigen Anschluss 46 des Druck-Förderstromreglers 45 mit der Stellkammer 30. Insgesamt ist somit in bekannter Weise eine Versorgung der hydraulischen Verbraucher 1 und 2 mit Druckmittel gemäß einer Load-Sensing-Regelung mit einer Begrenzung des Pumpendrucks durch das Druckbegrenzungsventil 62 möglich. Dabei wird der Hochdruckspeicher über das Speicherabsperrventil 22 und dessen Rückschlagventilfunktion auf den höchsten während der Betätigung der hydraulischen Verbraucher auftretenden Pumpendruck aufgeladen.

Dieser höchste auftretende Pumpendruck ist allerdings wegen der Druckbegrenzung für die Verbraucher durch sogenannte Sekundärdruckbegrenzungsventile niedriger als der für ein Starten des Dieselmotors notwendige Speicherdruck. Wird deshalb eine Situation festgestellt, die ein Ausschalten (Stoppen) des Dieselmotors angezeigt erscheinen lässt eine Situation, in der zwar keiner der hydraulischen Verbraucher 1 und 2 betätigt wird, der Dieselmotor aber aus sonstigen Gründen nicht ausgeschaltet werden soll, so wird zunächst das Verbraucherabsperrventil 20 geschlossen und dann der Hochdruckspeicher auf den gewünschten Ladedruck aufgeladen. Dazu wird das LS-Ventil 44 in die Schaltstellung gebracht, in der der zweite Eingang des Wechselventils 38 mit der Druckleitung 14 verbunden ist. Das Druckbegrenzungsventil 62 wird durch eine entsprechend Bestromung des zugehörigen Elektromagneten durch das elektronische Steuergerät 80 auf einen Druckwert eingestellt, der um das Pumpen-Δp unter dem durch den Drucksensor 75 erfassten und an das Steuergerät 80 gemeldeten Speicherdruck liegt. Wegen der Düse 64 steht dann der am Druckbegrenzungsventil eingestellte Druck am LS-Anschluss X des Druck-Förderstromreglers 45 an. Ausgehend von dem anfänglichen Druckwert wird nun durch eine rampenartige Verringerung des durch den Elektromagneten fließenden Stroms der Einstelldruck am Druckbegrenzungsventil 62 allmählich erhöht. Durch den Grad der zeitlichen Änderung des Einstelldrucks lässt sich über das LS-Regelventil ein Volumenstrom der als Pumpe arbeitenden Hydromaschine 10 einstellen, mit dem der Hochdruckspeicher 16 geladen wird. Ist der gewünschte Speicherdruck zum Beispiel 292 bar, so wird der Druckeinstellwert des Druckbegrenzungsventils 62 nicht mehr weiter erhöht, wenn dort 270 bar erreicht sind. Das LS-Ventil 44 wird wieder in sein Ruhestellung gebracht, das Druckbegrenzungsventil 62 kann kurzzeitig maximal bestromt werden, um den Druckabbau in der LS-Meldeleitung 56 über den Abbau über interne Leckagen oder eine in Figur 1 nicht eingezeichnete Düse oder ein Stromregelventil zum Tank zu beschleunigen.

Wird der Dieselmotor nun nicht ausgeschaltet, so stellt sich die Hydromaschine 10 im Pumpenbetrieb so ein, dass in der Druckleitung 14 nur noch der Stand-By-Druck von 22 bar, der gleich dem Pumpen-Δp ist, aufrechterhalten wird. Wird der Dieselmotor ausgeschaltet, gerät natürlich auch die Hydromaschine 10 außer Betrieb und wird durch die Rückstellfeder 29 auf maximales positives Hubvolumen verstellt. Der Hochdruckspeicher 16 ist auf den maximalen Speicherdruck, zum Beispiel 292 bar aufgeladen.

Soll der Dieselmotor wieder gestartet werden, so werden zunächst nur das Verbraucherabsperrventil 20 und das Steuerventil 48 betätigt. Letzteres wird in die Stellung gebracht, in der die Stellkammer 30 über das Steuerventil 48 und die Leitung 67 mit dem Hydrospeicher 16 verbunden ist. Die Stellkammer 30 wird also mit dem Speicherdruck beaufschlagt, so dass die Hydromaschine vom maximalen positiven Hubvolumen über null Hubvolumen zum maximalen negativen Hubvolumen verstellt wird. Die durch den Speicherdruck am Stellkolben 26 erzeugte Kraft muss dabei nur gegen die Kraft der Rückstellfeder 29 arbeiten, da in der Stellkammer 33 der am Druckanschluss P der Hydromaschine 10 herrschende Tankdruck ansteht. Die Verstellung geschieht also besonders schnell.

Erst wenn die Hydromaschine 10 negatives Hubvolumen erreicht hat und damit sichergestellt ist, dass sie nicht in einem Motorbetrieb entgegen der normalen Drehrichtung auf die Brennkraftmaschine 4 ein Drehmoment aufbringen kann, insbesondere dann wenn die Hydromaschine bei maximalem negativem Hubvolumen steht, wird das Speicherabsperrventil 22 in die Stellung gebracht, in der ein Druckmittelfluss vom Hydrospeicher 16 zum Druckanschluss P der Hydromaschine 10 möglich ist. Ist die Hydromaschine mit einem Positionssensor ausgestattet, mit dem das Hubvolumen erfasst wird, so kann das Speicherabsperrventil 22 in Abhängigkeit von dem Signal des Positionssensors geschaltet werden. Ansonsten wird es ein gewisse Zeitspanne nach dem Steuerventil 48 geschaltet, durch die sichergestellt ist, dass ein negatives Hubvolumen, insbesondere das maximale negative Hubvolumen erreicht ist. Durch das sich in seiner Sperrstellung befindliche Verbraucherabsperrventil 20 wird sichergestellt, dass nicht versehentlich einer der hydraulischen Verbraucher 1 und 2 bewegt wird.

Nach dem Öffnen des Speicherabsperrventils 44 beginnt die Hydromaschine 10, als Hydromotor die Brennkraftmachine anzutreiben. Kurz nach dem Schalten des Speicherabsperrventils 44 wird das Druckbegrenzungsventil 62 von dem Steuergerät 50 derart angesteuert, dass der Druck, auf den es eingestellt ist, um eine feste Druckdifferenz, vorliegend zum Beispiel um 35 bar, unterhalb des durch den Drucksensor 75 erfassten Speicherdrucks liegt. Die Druckdifferenz ist also etwa 1,6-mal so groß wie das Pumpen-Δp. Da der Speicherdruck durch die Entnahme des über die Hydromaschine fließenden Druckmittels absinkt, wird also auch der am Druckbegrenzungsventil 62 eingestellte Druck fortlaufend erniedrigt. Es sei hier darauf hingewiesen, dass der Druck in dem Leitungsabschnitt zwischen dem Speicherabsperrventil 22 und der Hydromaschine 10 wegen des Druckabfalls über das Speicherabsperrventil 22 und eine eventuell zwischen dem Speicherabsperrventil und dem Hydrospeicher eingebaute Düse niedriger als der Speicherdruck ist und dass der Druckabfall mit zunehmender Drehzahl der Brennkraftmaschine und damit der Hydromaschine zunimmt, da die über das Speicherabsperrventil fließende Druckmittelmenge zunimmt. Die Druckdifferenz zwischen dem Speicherdruck und dem am Druckbegrenzungsventil eingestellten Druck ist nun so gewählt, dass die von dem am Druckanschluss P der Hydromaschine 10 herrschenden Druck auf das LS-Regelventil ausgeübte Kraft kleiner ist als die Summe der von dem LS-Steuerdruck ausgeübten Kraft und der Kraft der Regelfeder 41. Das LS-Regelventil 40 befindet sich deshalb in der in der Figur gezeigten Stellung, in der der Anschluss 46 zum Tank entlastet ist. Sobald die Brennkraftmaschine die Startdrehzahl, zum Beispiel 400 Umdrehungen pro Minute, erreicht, von der aus sie ohne weiteren Antrieb bis auf die Leerlaufdrehzahl hochläuft, wird das Steuerventil 48 wieder in seine Grundstellung gebracht und damit die Stellkammer 30 vom Hydrospeicher 16 getrennt und mit dem Anschluss 46 des Druck-Förderstromreglers 45 verbunden. Ebenso wird ab diesem Zeitpunkt der Druckwert, auf den das Druckbegrenzungsventil 62 gerade eingestellt ist, nicht mehr weiter verändert. Da die Hydromaschine 10 zunächst weiter bei negativem Hubvolumen steht, ist der Druck am Hochdruckanschluss P weiterhin niedriger als der Speicherdruck. Zudem sinken der Speicherdruck und zunächst auch der Pumpendruck weiter ab. Sollte dabei der LS-Steuerdruck unter den nun am Druckbegrenzungsventil 62 eingestellten und konstant gehaltenen Wert absinken, weil der Druck am Eingang des LS-Ventils 44 kleiner wird als der am Druckbegrenzungsventil 62 eingestellt Druck, so bleibt dies ohne Einfluss auf die Stellung des LS-Regelventils 40, da zwar nun die beiden an diesem Ventil anstehenden Drücke ungefähr gleich groß sein mögen, die Stellung des Ventils jedoch unter der Wirkung der Regelfeder 41 beibehalten wird.

Nachdem das Steuerventil 48 in seine Grundstellung gebracht worden ist, ist also die Stellkammer 30 über das Steuerventil 48 und das LS-Regeventil 40 zum Tank entlastet und der Rückschwenkvorgang der Hydromaschine kann sofort beginnen. In der Stellkammer 33 am Stellkolben 28 steht der am Druckanschluss P herrschende Druck an. Dieser Druck wirkt zusammen mit der Rückstellfeder 29 in Richtung einer Verstellung des Hubsteuerelements in Richtung Hubvolumen null. Weil die insgesamt wirkende Rückstellkraft sehr groß ist, ist die Beschleunigung des Hubsteuerelements groß, so dass die Rückstellung mit hoher Dynamik erfolgt.

In einem zeitlichen Abstand nach der Rückkehr des Steuerventils 48 in seine Grundstellung, durch den sichergestellt ist, dass die Hydromaschine 10 zu einem positiven Hubvolumen verstellt ist, wird das Speicherabsperrventil 22 wieder in seine Grundstellung gebracht. Somit ist sichergestellt, dass während der gesamten Rückstellphase bis zum Hubvolumen null in der Druckleitung 14 ein Druck ansteht. Damit wird Kavitation an der Hydromaschine vermieden. Zudem greift wie oben beschrieben am Hubsteuerelement eine große Kraft an.

Beim Zurückschwenken der Hydromaschine 10 nimmt der Druckmittelfluss vom Hydrospeicher 16 zur Hydromaschine kontinuierlich ab und ist beim Hubvolumen null gleich null. Dementsprechend wird die Druckdifferenz zwischen dem Speicherdruck und dem Pumpendruck der Hydromaschine 10 immer kleiner und ist beim Hubvolumen null gleich null. Die während des Startvorgangs bis zum Erreichen der Startdrehzahl konstant gehaltene Druckdifferenz zwischen dem Speicherdruck und dem am Druckbegrenzungsventil eingestellten Druck ist nun so gewählt, dass der nach dem Zurückschalten des Steuerventils 48 in die Grundstellung der am Druckbegrenzungsventil nun konstant gehaltene Druckwert etwa um das Pumpen-Δp unter dem Speicherdruck liegt, wenn die Hydromaschine bei der Rückstellung zum Hubvolumen null gelangt. Damit wird erreicht, dass die Hydromaschine 10 nicht auf das maximale positive Hubvolumen verstellt wird, sondern unterhalb eines positiven Hubvolumens von zum Beispiel 45 Prozent des maximalen positiven Hubvolumens verbleibt, das den Dieselmotor wieder stillstehen lassen würde. Sollte bei Erreichen des Hubvolumens null die Differenz zwischen dem Pumpendruck und dem durch die Einstellung des Druckbegrenzungsventil 62 vorgegebenen LS-Steuerdruck etwas kleiner als das Pumpen-Δp sein, so wird die Hydromaschine 10 als Pumpe bei kleinem positiven Hubvolumen etwas Menge fördern, um eine dem Pumpen-Δp entsprechende Differenz zwischen dem Pumpendruck und dem LS-Steuerdruck herzustellen. Sollte bei der Annäherung an das Hubvolumen null die Differenz zwischen dem Pumpendruck und dem durch die Einstellung des Druckbegrenzungsventil 62 vorgegebenen LS-Steuerdruck etwas kleiner als das Pumpen-Δp sein, so wird die Hydromaschine 10 als Motor bei kleinem negativen Hubvolumen noch etwas Menge schlucken, um eine dem Pumpen-Δp entsprechende Differenz zwischen dem Pumpendruck und dem LS-Steuerdruck herzustellen.

Es wird in jedem Fall ein Zustand erreicht, in dem die Hydromaschine 10 bei einem kleinen positiven Hubvolumen gerade so viel Druckmittelmenge fördert, dass interne Leckage ausgeglichen und ein Pumpendruck aufrechterhalten wird, der um das Pumpen-Δp über dem durch die Einstellung des Druckbegrenzungsventils 62 vorgegebenen Wert liegt. Anschließend wird die Einstellung des Druckbegrenzungsventils 62 über eine Rampe auf einen Druckwert nahe null heruntergefahren und entsprechend auch der Pumpendruck auf einen niedrigen Stand-by Druck verringert. Danach wird das Verbraucherabsperrventil 20 in seine Durchgangsstellung gebracht.

Ein erfindungsgemäßer hydrostatischer Antrieb ist insbesondere auch in der konkreten Ausgestaltung vor allem für die Verwendung in Bussen, Schienenfahrzeugen oder in von Zustelldiensten genutzten Fahrzeugen geeignet, also in Fahrzeugen, mit denen oft angehalten und wieder losgefahren wird.

### Bezugszeichenliste

- 1: Lenkhydraulik
- 2: weitere Verbraucher
- 4: Dieselmotor
- 6: Kurbelwelle
- 8: Triebwelle
- 10: Hydromaschine
- 12: Gehäuse
- 13: Tank
- 14: Druckleitung
- 16: Hochdruckspeicher
- 18: Verzweigung
- 20: Verbraucherabsperrventil
- 22: Speicherabsperrventil
- 26: erster Stellkolben
- 28: zweiter Stellkolben
- 29: Rückstellfeder
- 30: Stellkammer
- 31: Ventilanordnung
- 32: Kammeranschluss
- 33: Stellkammer
- 36: LS-Meldeleitung
- 38: Wechselventil
- 39: Druckregelventil
- 40: LS-Regelventil
- 44: LS-Ventil
- 45: Druck-Förderstromregler
- 46: Anschluss von 45
- 48: Steuerventil
- 52: Start-Stopp-Ventilblock
- 54: Wechselventil
- 56: LS-Meldeleitung
- 62: Druckbegrenzungsventil
- 64: Düse
- 66: Anschluss von 48
- 67: Leitung
- 75: Drucksensor
- 76: Temperatursensor
- 80: Steuereinheit
- 81: elektrische Leitung
- 82: elektrischen Leitung
- 83: elektrische Leitungen

- T: Tankanschluss
- P: Druckanschluss
- X: LS-Anschluss

## Patentansprüche

1. Hydrostatischer Antrieb, insbesondere zum Starten einer Brennkraftmaschine (4), mit einer mittels einer hydraulischen Verstellvorrichtung in ihrem Hubvolumen von einem maximalen positiven Hubvolumen über ein Hubvolumen null zu einem maximalen negativen Hubvolumen verstellbaren Hydromaschine (10), die mit positivem Hubvolumen als Pumpe und mit negativem Hubvolumen als Motor betreibbar ist, mit zumindest einem Hochdruckspeicher (16), aus dem die Hydromaschine (10) für den Betrieb als Motor über eine Druckleitung (14), die zwischen einem Druckanschluss (P) der Hydromaschine (10) und dem Hochdruckspeicher (16) verläuft, mit Druckmittel versorgbar ist, mit einem Speicherabsperrventil (22) mit einer ersten Stellung und einer zweiten Stellung, das in der Druckleitung (14) angeordnet ist und durch das eine fluidische Verbindung vom Hochdruckspeicher (16) zur Hydromaschine (10) in der ersten Stellung offen und in der zweiten Stellung abgesperrt ist, und mit einem elektronischen Steuereinheit (80), in Abhängigkeit von deren Signalen das Speicherabsperrventil (22) betätigbar ist, **dadurch gekennzeichnet, dass** bei einer Verstellung der Hydromaschine (10) von einem negativen Hubvolumen zu einem positiven Hubvolumen das elektronische Steuergerät (80) dann ein Signal zum Umschalten des Speicherabsperrventils (22) von der ersten Stellung in die zweite Stellung gibt, dass das Speicherabsperrventil (22) erst bei einem Hubvolumen null oder bei einem positiven Hubvolumen der Hydromaschine (10) in die zweite Stellung umschaltet.

2. Hydrostatischer Antrieb nach Patentanspruch 1, wobei die Verstellvorrichtung eine erste an einen Stellkolben (26) angrenzende Stellkammer (30), für die ein eine Verstellung in Richtung maximalem negativen Hubvolumen bewirkender Zufluss und ein Abfluss von Druckmittel durch eine Ventilanordnung (31) steuerbar ist, eine zweite an einen Stellkolben (28) angrenzende Stellkammer (33), die dauernd mit dem Druckanschluss (P) fluidisch verbunden ist und die sich bei einer Verstellung in Richtung maximalem negativen Hubvolumen verkleinert und bei einer Verstellung in Richtung maximalem positiven Hubvolumen vergrößert, und eine Rückstellfeder (29) umfasst, die Richtung maximalem positiven Hubvolumen wirkt.

3. Hydrostatischer Antrieb nach Patentanspruch 2, wobei die Ventilanordnung (31) ein Steuerventil (48) umfasst, über das für eine Verstellung zu negativem Hubvolumen der ersten Stellkammer (30) unabhängig vom Druckanschluss (P) der Hydromaschine (10) aus einer Druckmittelquelle (16) mit Druckmittel versorgbar ist.

4. Hydrostatischer Antrieb nach Patentanspruch 3, wobei die Ventilanordnung (31) für den Betrieb der Hydromaschine (10) als Pumpe ein hydraulisches Regelgerät (45) mit einem Anschluss (46) umfasst, wobei das Steuerventil (48) ein 3/2-Wegeventil mit einem ersten Anschluss, der mit dem Anschluss (46) des hydraulischen Regelgeräts (45) fluidisch verbunden ist, mit einem zweiten Anschluss (66), der mit der Druckmittelquelle (16) fluidisch verbunden ist, und mit einem dritten Anschluss ist, der mit der ersten Stellkammer (30) verbunden ist, und wobei das Steuerventil (48) eine erste Stellung, in der der dritte Anschluss mit dem ersten Anschluss fluidisch verbunden und der zweite Anschluss (66) abgesperrt ist, und eine zweite Stellung aufweist, in der der dritte Anschluss mit dem zweiten Anschluss (66) verbunden und der erste Anschluss abgesperrt ist.

5. Hydrostatischer Antrieb nach Patentanspruch 4, wobei das hydraulische Regelgerät (45) ein Load-Sensing (LS-) Regelventil (40) umfasst, das im Sinne eines Druckmittelzuflusses zur ersten Stellkammer (30) der Verstellvorrichtung vom Druck am Druckanschluss (P) und im Sinne eines Druckmittelabflusses aus der ersten Stellkammer (30) von einer Regelfeder (41) und einem LS-Steuerdruck, der an einem LS-Anschluss (X) ansteht, beaufschlagt wird, und wobei noch bei negativem Hubvolumen der Hydromaschine (10) ein LS-Steuerdruck an den LS-Anschluss (X) des Load-Sensing(LS)-Regelventils(40) gegeben wird.

6. Hydrostatischer Antrieb nach Patentanspruch 5, wobei schon, während sich das Steuerventil (48) noch in seiner zweiten Stellung befindet, das Load-Sensing (LS-) Regelventil (40) mit einem LS-Steuerdruck beaufschlagt wird.

7. Hydrostatischer Antrieb nach Patentanspruch 5 oder 6, wobei der an den LS-Anschluss (X) gegebene LS-Steuerdruck etwa um das Druckäquivalent der Regelfeder (41) niedriger ist als der Druck am Druckanschluss(P), wenn die Hydromaschine (10) beim Zurückschwenken vom maximalen negativen Hubvolumen das Hubvolumen null erreicht, so dass die Hydromaschine (10) über das Hubvolumen null, aber nicht bis zu maximalem positiven Hubvolumen verstellt wird.

8. Hydrostatischer Antrieb nach Patentanspruch 5 oder 6, wobei schon ein LS-Steuerdruck an den LS-Anschluss (X) des Load-Sensing (LS)-Regelventils (40) gegeben wird, wenn sich das Steuerventil (48) noch in seiner zweiten Stellung befindet, wobei der LS-Steuerdruck zunächst mit einer festen Druckdifferenz unterhalb des Drucks im Hochdruckspeicher (16) dem sinkenden Speicherdruck folgt und wobei der LS-Steuerdruck konstant gehalten wird, wenn das Steuerventil (48) von seiner zweiten Stellung in seine erste Stellung geschaltet wird.

9. Hydrostatischer Antrieb nach Patentanspruch 8, wobei die feste Druckdifferenz etwa 1,6-mal so groß ist wie das Druckäquivalent der Regelfeder (41) des Load-Sensing (LS)-Regelventils.

10. Hydrostatischer Antrieb nach einem vorhergehenden Patentanspruch, wobei die Hydromaschine mit einem Aufnehmer für das Hubvolumen ausgestattet ist und wobei nach dem Umschalten des Steuerventils von der zweiten Stellung in die erste Stellung die Höhe des LS-Steuerdrucks in Abhängigkeit von der Größe des negativen Hubvolumens oder der Änderung des negativen Hubvolumens bestimmt wird.

11. Hydrostatischer Antrieb nach einem vorhergehenden Patentanspruch, wobei die Hydromaschine mit einem Aufnehmer für das Hubvolumen ausgestattet ist und wobei nach dem Umschalten des Steuerventils von der zweiten Stellung in die erste Stellung das Speicherabsperrventil in Abhängigkeit von der Größe des erfassten Hubvolumens von der ersten Stellung in die zweite Stellung umgeschaltet wird.

## Claims

1. Hydrostatic drive, in particular for starting an internal combustion engine (4), having a hydraulic machine (10) which is adjustable in terms of its swept volume from a maximum positive swept volume via a swept volume of zero to a maximum negative swept volume by means of a hydraulic adjustment device, which hydraulic machine is operable with positive swept volume as a pump and with negative swept volume as a motor, having at least one high-pressure accumulator (16) from which the hydraulic machine (10) can, for operation as a motor, be supplied with pressure medium via a pressure line (14) which runs between a pressure port (P) of the hydraulic machine (10) and the high-pressure accumulator (16), having an accumulator shut-off valve (22) with a first position and a second position, which accumulator shut-off valve is arranged in the pressure line (14) and by means of which accumulator shut-off valve a fluidic connection from the high-pressure accumulator (16) to the hydraulic machine (10) is open in the first position and is shut off in the second position, and having an electronic control unit (80), the accumulator shut-off valve (22) being actuable as a function of the signals of said electronic control unit, **characterized in that**, in the event of an adjustment of the hydraulic machine (10) from a negative swept volume to a positive swept volume, the electronic control unit (80) transmits a signal for switching the accumulator shut-off valve (22) from the first position into the second position at such a time that the accumulator shut-off valve (22) switches into the second position only in the presence of a swept volume of zero or a positive swept volume of the hydraulic machine (10).

2. Hydrostatic drive according to Patent Claim 1, wherein the adjustment device comprises a first adjustment chamber (30), which adjoins an adjustment piston (26) and for which an inflow, which effects an adjustment in the direction of maximum negative swept volume, and an outflow of pressure medium are controllable by means of a valve arrangement (31), a second adjustment chamber (33), which adjoins an adjustment piston (28) and which is permanently fluidically connected to the pressure port (P) and which is decreased in size in the event of an adjustment in the direction of maximum negative swept volume and is increased in size in the event of an adjustment in the direction of maximum positive swept volume, and a restoring spring (29), which acts in the direction of maximum positive swept volume.

3. Hydrostatic drive according to Patent Claim 2, wherein the valve arrangement (31) comprises a control valve (48) by means of which, for an adjustment to negative swept volume, the first adjustment chamber (30) can be supplied with pressure medium from a pressure medium source (16) independently of the pressure port (P) of the hydraulic machine (10).

4. Hydrostatic drive according to Patent Claim 3, wherein the valve arrangement (31) comprises, for the operation of the hydraulic machine (10) as a pump, a hydraulic regulating unit (45) with a port (46), wherein the control valve (48) is a 3/2-way valve with a first port, which is fluidically connected to the port (46) of the hydraulic regulating unit (45), with a second port (66), which is fluidically connected to the pressure medium source (16), and with a third port, which is connected to the first adjustment chamber (30), and wherein the control valve (48) has a first position, in which the third port is fluidically connected to the first port and the second port (66) is shut off, and a second position, in which the third port is connected to the second port (66) and the first port is shut off.

5. Hydrostatic drive according to Patent Claim 4, wherein the hydraulic regulating unit (45) comprises a load sensing (LS) regulating valve (40) which is acted on, in the sense of a pressure medium inflow into the first adjustment chamber (30) of the adjustment device, by the pressure at the pressure port (P), and in the sense of a pressure medium outflow out of the first adjustment chamber (30), by a regulating spring (41) and an LS control pressure which prevails at an LS port (X), and wherein an LS control pressure is transmitted to the LS port (X) of the load sensing (LS) regulating valve (40) when the swept volume of the hydraulic machine (10) is still negative.

6. Hydrostatic drive according to Patent Claim 5, wherein the load sensing (LS) regulating valve (40) is acted on with an LS control pressure already while the control valve (48) is still situated in its second position.

7. Hydrostatic drive according to Patent Claim 5 or 6, wherein the LS control pressure transmitted to the LS port (X) is lower, approximately by the pressure equivalent of the regulating spring (41), than the pressure at the pressure port (P) when the hydraulic machine (10) reaches the swept volume of zero when pivoting back from the maximum negative swept volume, such that the hydraulic machine (10) is adjusted beyond the swept volume of zero but not as far as the maximum positive swept volume.

8. Hydrostatic drive according to Patent Claim 5 or 6, wherein an LS control pressure is transmitted to the LS port (X) of the load sensing (LS) regulating valve (40) when the control valve (48) is still situated in its second position, wherein the LS control pressure initially follows the falling accumulator pressure with a fixed pressure difference below the pressure in the high-pressure accumulator (16), and wherein the LS control pressure is held constant when the control valve (48) is switched from its second position into its first position.

9. Hydrostatic drive according to Patent Claim 8, wherein the fixed pressure difference is approximately 1.6 times the pressure equivalent of the regulating spring (41) of the load sensing (LS) regulating valve.

10. Hydrostatic drive according to one of the preceding patent claims, wherein the hydraulic machine is equipped with a sensor for the swept volume, and wherein, after the switching of the control valve from the second position into the first position, the level of the LS control pressure is determined in a manner dependent on the magnitude of the negative swept volume or of the change in the negative swept volume.

11. Hydrostatic drive according to one of the preceding patent claims, wherein the hydraulic machine is equipped with a sensor for the swept volume and wherein, after the switching of the control valve from the second position into the first position, the accumulator shut-off valve is switched from the first position into the second position in a manner dependent on the magnitude of the detected swept volume.

## Revendications

1. Entraînement hydrostatique, en particulier pour faire démarrer un moteur à combustion interne (4), avec une machine hydraulique (10) réglable en cylindrée au moyen d'un dispositif de réglage hydraulique depuis une cylindrée positive maximale jusqu'à une cylindrée négative maximale en passant par une cylindrée nulle, qui peut fonctionner avec une cylindrée positive comme pompe et avec une cylindrée négative comme moteur, avec au moins un réservoir à haute pression (16), à partir duquel la machine hydraulique (10) peut être alimentée en fluide sous pression pour le fonctionnement en moteur par l'intermédiaire d'une conduite sous pression (14) qui relie un raccord de pression de la machine hydraulique (10) et le réservoir à haute pression (16), avec une vanne de fermeture de réservoir (22) avec une première position et une deuxième position, qui est disposée dans la conduite sous pression (14) et par laquelle une liaison fluidique entre le réservoir à haute pression (16) et la machine hydraulique (10) est ouverte dans la première position et fermée dans la deuxième position, et avec une unité de commande électronique (80), en fonction de signaux de laquelle la vanne de fermeture de réservoir (22) peut être actionnée, **caractérisé en ce que** lors d'un déplacement de la machine hydraulique (10) d'une cylindrée négative à une cylindrée positive l'appareil de commande électronique (80) émet alors un signal pour commuter la vanne de fermeture (22) de la première position à la deuxième position, qui ne commute la vanne de fermeture de réservoir (22) dans la deuxième position que pour une cylindrée nulle ou pour une cylindrée positive de la machine hydraulique (10).

2. Entraînement hydrostatique selon la revendication 1, dans lequel le dispositif de réglage comprend une première chambre de réglage (30) adjacente à un piston de réglage (26), pour laquelle une arrivée et un départ de fluide sous pression causant un déplacement en direction de la cylindrée négative maximale peut être commandé(e) par un système de vannes (31), une deuxième chambre de réglage (33) adjacente à un piston de réglage (28), qui est en permanence raccordée fluidiquement au raccord de refoulement (P) et qui décroît lors d'un déplacement en direction de la cylindrée négative maximale et qui augmente lors d'un déplacement en direction de la cylindrée positive maximale, et un ressort de rappel (29), qui agit en direction de la cylindrée positive maximale.

3. Entraînement hydrostatique selon la revendication 2, dans lequel le système de vannes (31) comprend une vanne de commande (48), par laquelle pour un déplacement en direction de la cylindrée négative maximale de la première chambre de réglage (30) on peut alimenter en fluide sous pression à partir d'une source de fluide sous pression (16) indépendamment du raccord de refoulement (P) de la machine hydraulique (10).

4. Entraînement hydrostatique selon la revendication 3, dans lequel le système de vannes (31) comprend pour le fonctionnement de la machine hydraulique (10) comme pompe un appareil de régulation hydraulique (45) avec un raccord (46), dans lequel la vanne de commande (48) est une vanne à 3/2 voies avec un premier raccord, qui est fluidiquement raccordé au raccord (46) de l'appareil de régulation hydraulique (45), avec un deuxième raccord (66), qui est fluidiquement raccordé à la source de fluide sous pression (16), et avec un troisième raccord, qui est raccordé à la première chambre de réglage (30), et dans lequel la vanne de commande (48) présente une première position, dans laquelle le troisième raccord est fluidiquement raccordé au premier raccord et le deuxième raccord (66) est fermé, et une deuxième position, dans laquelle le troisième raccord est raccordé au deuxième raccord (66) et le premier raccord est fermé.

5. Entraînement hydrostatique selon la revendication 4, dans lequel l'appareil de régulation hydraulique (45) comprend une vanne de régulation Load-Sensing (LS) (40), qui est soumise dans le sens d'une arrivée de fluide sous pression à la première chambre de réglage (30) du dispositif de déplacement à la pression existant au raccord de refoulement (P) et dans le sens d'un départ de fluide sous pression hors de la première chambre de réglage (30) à un ressort de régulation (41) et à une pression de commande LS, qui est présente à un raccord LS (X), et dans lequel une pression de commande LS est présente au raccord LS (X) de la vanne de régulation Load-Sensing (LS) (40) encore en cas de cylindrée négative de la machine hydraulique (10).

6. Entraînement hydrostatique selon la revendication 5, dans lequel, déjà pendant que la vanne de commande (48) se trouve encore dans sa deuxième position, la vanne de régulation Load-Sensing (LS) 10) est soumise à une pression de commande LS.

7. Entraînement hydrostatique selon la revendication 5 ou 6, dans lequel la pression de commande LS présente au raccord LS (X) est légèrement plus basse, de la pression équivalente du ressort de régulation (41), que la pression au raccord de refoulement (P), lorsque la machine hydraulique (10) atteint la cylindrée nulle lors du retour depuis la cylindrée négative maximale, de telle manière que la machine hydraulique (10) soit déplacée via la cylindrée nulle, mais pas jusqu'à la cylindrée positive maximale.

8. Entraînement hydrostatique selon la revendication 5 ou 6, dans lequel une pression de commande LS est déjà présente au raccord LS (X) de la vanne de régulation Load-Sensing (LS) (40) lorsque la vanne de commande (48) se trouve encore dans sa deuxième position, dans lequel la pression de commande LS suit d'abord la pression de réservoir décroissante avec une différence de pression fixe en dessous de la pression dans le réservoir à haute pression (16) et dans lequel la pression de commande LS est maintenue constante, lorsque la vanne de commande (48) est commutée de sa deuxième position à sa première position.

9. Entraînement hydrostatique selon la revendication 8, dans lequel la différence de pression fixe est environ 1,6 fois plus élevée que la pression équivalente du ressort de régulation (41) de la vanne de régulation Load-Sensing (LS).

10. Entraînement hydrostatique selon l'une quelconque des revendications précédentes, dans lequel la machine hydraulique est équipée d'un enregistreur pour la cylindrée et dans lequel après la commutation de la vanne de commande de la deuxième position à la première position la hauteur de la pression de commande LS est déterminée en fonction de la grandeur de la cylindrée négative ou de la variation de la cylindrée négative.

11. Entraînement hydrostatique selon l'une quelconque des revendications précédentes, dans lequel la machine hydraulique est équipée d'un enregistreur pour la cylindrée et dans lequel après la commutation de la vanne de commande de la deuxième position à la première position la vanne de fermeture de réservoir est commutée de la première position à la deuxième position en fonction de la grandeur de la cylindrée détectée.
